# DEMANDE DE BREVET EUROPEEN

(11) **EP 1 312 977 A1**
(43) Date de publication de la demande: **21.05.2003**
(21) Numéro de dépôt: 01402954.0
(22) Date de dépôt: 16.11.2001
(51) Int. Cl.: G03B 42/04

(54) **Cassette bidirectionnelle utilisée pour l'imagerie médicale numérisée, en radiodiagnostic conventionnel, contenant deux écrans électroluminescents**

(71) Demandeur: Delaby, Wilfrid, 91360 Epinay sur Orge (FR)
(72) Inventeur: Delaby, Wilfrid, 91360 Epinay sur Orge (FR)

(57) **Abrégé**

Ce dispositif, composé d'une cassette radiologique et, à l'intérieur, de deux écrans électroluminescents juxtaposés, est destiné à la radiologie conventionnelle numérisée pour bénéficier d'un champ d'exposition de surface double de celui des champs couverts par les cassettes utilisées en imagerie médicale numérique par rayons « X » dénommée radiographie numérique par plaques électroluminescentes. Cette cassette rectangulaire, munie de deux orifices d'ouverture occupants deux cotés opposés de la cassette, permet une double introduction bidirectionnelle dans les systèmes courants de lecture de ces plaques. Ces deux images numériques obtenues par la lecture successive de deux écrans sont alors recomposées dans une console informatique d'imagerie pour former une image unique.

Cette cassette trouve toute son utilité en radiodiagnostic pour l'étude du rachis dans son entier et pour la radiographie des membres inférieurs . Elle permet de mettre en oeuvre ces examens en utilisant la technique numérique, tout en bénéficiant d'une grande variété de couverture de champ d'exposition.

## Description

La présente invention concerne un dispositif d'assemblage de deux écrans, sensibles aux rayons « X », juxtaposés et adjacents à l'intérieur, d'une cassette radiologique dans le domaine de l'imagerie conventionnelle, assistée par ordinateur utilisant le principe de l'électroluminescence.

La cassette chargée avec de tels écrans électroluminescents est exposée aux rayons « X »,qui absorbés, vont créer sur l'écran une image latente, puis cette cassette est introduite dans un dispositif annexe de lecture d'écrans qui va prendre en charge leur extraction hors de la cassette, les lire, les effacer et les recycler dans la cassette pour une autre exposition.

La lecture de ces écrans dits « à mémoire de lumière » consiste en une stimulation optique obtenue par un balayage Laser, produit à l'intérieur d'un lecteur qui provoque une radiation lumineuse dite « électroluminescente ». La lumière, ainsi produite est convertie en signal électrique, lequel est numérisé sous forme d'image matricielle envoyée sur une console informatique.

L'effacement ou le recyclage de ces écrans est obtenu par une exposition lumineuse intense, processus mis en oeuvre, habituellement, à l'intérieur même du lecteur.

Une fois recyclés, ces écrans reprennent place dans leur cassette d'origine. Cette technique d'utilisation des écrans électroluminescents en radiologie conventionnelle est habituellement dénommée technique « numérique ».

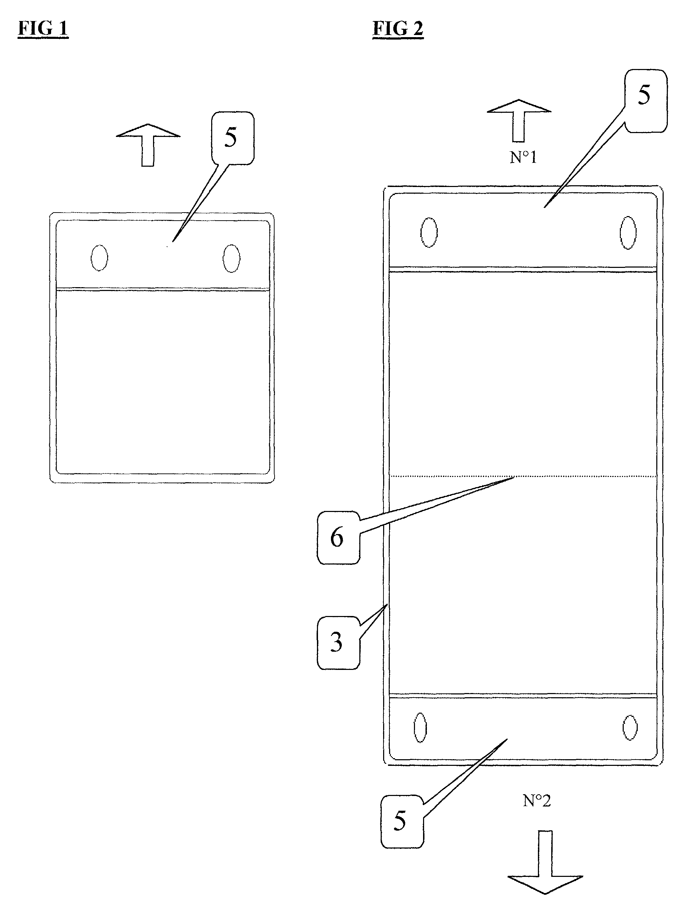

Les lecteurs d'écrans électroluminescents sont conçus pour analyser les formats standards, habituellement utilisés en radiologie conventionnelle. Mais, pour des raisons de complexité et de coût de fabrication de ces lecteurs, les formats de cassette fig. 1 sont limités à trois ou quatre, à savoir par exemple : format 36*43 cm (ou 14*17 pouces), format 36*36 (ou 14*14 pouces) format 24*30 cm (ou 10*12 pouces) et format 18*24 cm .

Or, en radiologie, plusieurs autres formats de cassette sont nécessaires pour explorer les organes ou parties du corps humain ou animal. Habituellement pour pallier cette limitation du nombre de formats disponibles, et plus particulièrement dans les plus grands, ces explorations sont effectuées en utilisant des cassettes chargées avec des films radiologiques conventionnels.

Cette technologie des films radiologiques conventionnels est d'utilisation courante dans tous les services médicaux d'exploration par les rayons « X ». Ceci implique la présence, dans le service d'exploration radiologique , des moyens d'exploitation de cette méthode, à savoir : chambres noires pour l'extraction des films de leur cassette et leur passage en machine à développer, ou présence de systèmes dits « plein jour » pour le développement photographique automatique de ces films.

Cette limitation des formats de cassette disponibles en technique « numérique » est préjudiciable à la méthode elle-même. Alors que, cette dernière présente de nombreux avantages d'exploitation, comme la suppression de l'utilisation de produits chimiques de développement et d'autres qualités intrinsèques relatives à la visualisation des images. Cette méthode produit des images radiologiques numériques, laquelle facilite énormément leur lecture ainsi que leur communication à l'intérieur et à l'extérieur du site où elles sont produites.

Cette permanence de deux systèmes de production d'images radiologiques, à savoir le système conventionnel avec films photosensibles et écrans électroluminescents, entraîne des coûts d'exploitation supplémentaires.

La présente invention concerne donc un dispositif fig.2 qui permet de doubler la surface des champs d'exploration en technique numérique, sans modification de la conception des lecteurs d'écrans électroluminescents.

Avec le même objectif, d'autres dispositifs sont en cours d'évaluation. Ils consistent à juxtaposer plusieurs cassettes chargées avec des écrans électroluminescents sur un panneau support de cassettes. Ces cassettes, après exposition aux rayons « X », sont introduites manuellement les unes après les autres dans le lecteur d'écrans. Ces méthodes ne sont pas sans poser des problèmes relatifs à la qualité d'images sur les jonctions de cassettes.

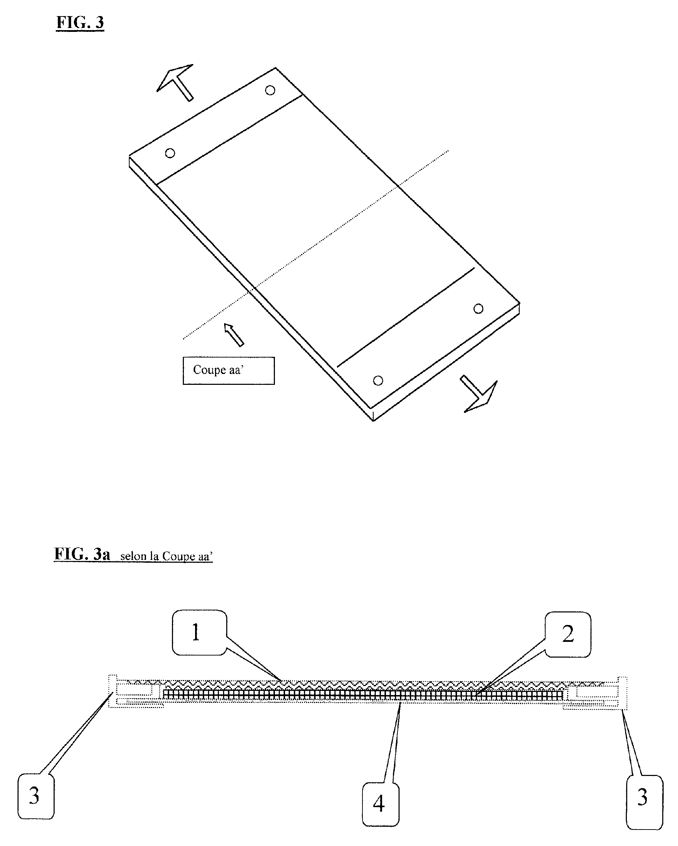

Une autre méthode consiste à charger de façon jointive, dans des cassettes prévues pour films radiologiques, plusieurs écrans électroluminescents. Après exposition aux rayons « X », ces mêmes écrans électroluminescents sont replacés dans des cassettes numériques spéciales pour leur lecture en méthode numérique. Ceci entraîne d'importantes lourdeurs d'exploitation et fragilise la durée de vie des écrans, suite aux grand nombre de manipulations successives de ceux-ci en dehors de leur cassette d'origine.
La cassette radiologique, conventionnelle ou numérique Fig.1, est de forme parallélépipède et se compose de quatre éléments.
1. Une face d'entrée des rayons « X» 4 fig.3a en matière aussi peu absorbante que possible aux rayons « X» , mais opaque à la lumière, généralement plaque en fibres de verre.
2. Un cadre métallique sur son pourtour 3 fig.3a, par exemple en profilé d'aluminium, permettant d'assurer la rigidité de l'ensemble, et de solidariser l'ensemble des éléments.
3. Un dos 1 fig.3a comportant une protection plombée pour absorber les rayons « X » rétro diffusés.
4. Généralement sur un petit côté de la cassette, un dispositif mécanique 5 fig. 1 permettant l'ouverture automatique de la cassette pour y prélever le film radiologique ou l'écran électroluminescente lors de la présentation à l'orifice de lecture. Ce dispositif est habituellement constitué d'un volet solidaire du dos de la cassette d'un coté et de l'autre coté équipé du dispositif d'ouverture automatique 5.
En ce qui concerne la cassette numérique standard (Fig.1), le dispositif d'ouverture se situe sur l'un des plus petits côtés de la cassette. C'est ce coté qui sera introduit dans le lecteur pour permettre l'extraction automatique de l'écran et sa lecture dans la zone de balayage Laser.

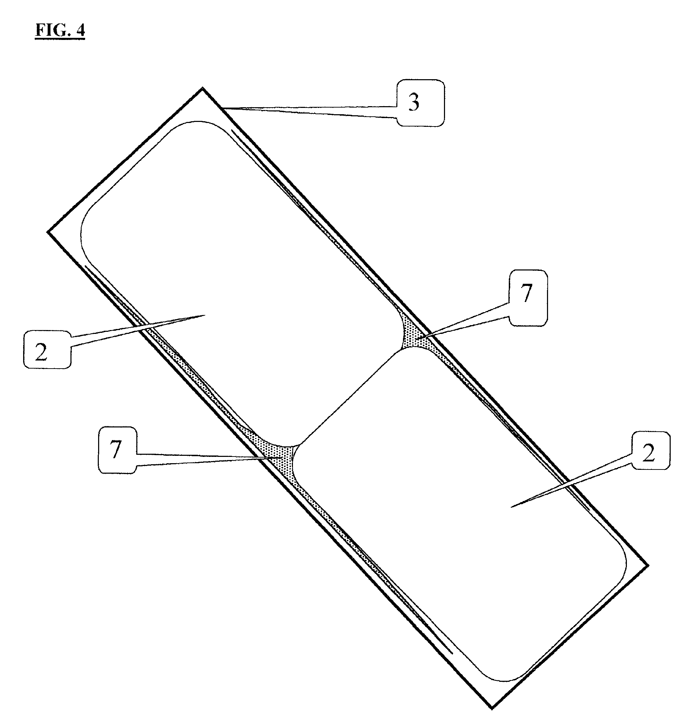

Le dispositif, objet du brevet (Fig. 2), est constitué d'une cassette présentant deux dispositifs d'ouverture 5 de celle-ci, placés sur les deux petits cotés du rectangle.
A l'intérieur de cette cassette, on y place deux écrans électroluminescents 2, de forme rectangulaires avec angles arrondis, juxtaposés et jointifs.(Fig. 3) Ainsi constitué, le dispositif présente une surface de détection des rayons «X» double de celle d'une cassette numérique standard.
Cette cassette, ainsi constituée, peut disposer de deux joues 7 fig.4 de centrage des écrans à l'intérieur de la cassette(Fig.3). Celles-ci placées le long du cadre 3, entre la face d'entrée 4 et le dos plombé 1, assurent un alignement parfait des écrans
Une fois exposée, cette cassette sera présentée au lecteur en deux temps. Première lecture de l'écran n°1, puis retournement de 180° de la cassette et lecture de l'écran n°2, (Fig.3). Le lecteur produira donc deux fichiers numériques qui seront envoyés sur une console de traitements informatiques. Celle-ci en assurera la synthèse, pour ne produire qu'une seule image de surface double.

Les dessins annexés illustrent l'invention :
- La figure 1 représente en vue de dessus une cassette numérique standard.
- La figure 2 représente en vue de dessus la cassette numérique « bidirectionnelle ».
- La figure 3 représente en perspective cette cassette avec son axe de symétrie 6 , la figure 3a représente en coupe la cassette au niveau de son axe de symétrie 6.
- La figure 4 représente en perspective la disposition des écrans dans la cassette avec leurs joues 7 de centrage.

## Revendications

1. Cette cassette numérique « bidirectionnelle » utilisée pour l'imagerie radiologique assistée par ordinateur, est **caractérisée en ce qu'**elle contient deux écrans juxtaposés 2 (Fig.2 et 4).

2. Cassette, selon la revendication 1 **caractérisée en ce que** deux mécanismes d'ouverture automatiques 5, placés en opposition (Fig.3) assurent l'extraction des deux écrans.

3. Cette cassette, selon la revendication 1 et la revendication 2, **caractérisée en ce que** deux joues latérales 7 (Fig. 4), de par leur forme épousant l'angle arrondi des écrans, assurent la continuité de l'image, d'une part, par une juxtaposition des deux écrans et d'autre part, par l'alignement de ceux-ci.
